# EUROPEAN PATENT SPECIFICATION

(11) **EP 1 803 632 B1**
(45) Date of publication and mention of the grant of the patent: **14.07.2010**
(21) Application number: 05776758.4
(22) Date of filing: 31.08.2005
(51) Int. Cl.: B62D 21/02, B62D 25/20

(54) **FRAME REINFORCEMENT MEMBER**
RAHMENVERSTÄRKUNGSGLIED
ORGANE DE RENFORT DE CADRE

(30) Priority: 02.09.2004 JP 2004256360
(43) Date of publication of application: 04.07.2007
(73) Proprietor: Nissan Motor Light Truck Co., Ltd, Saitama 362-0046 (JP)
(72) Inventor: TANAKA, Yukihiro, -chome, Ageo-shi, Saitama 3620046; (JP); MIURA, Tsuyoshi, -chome, Ageo-shi, Saitama 3620046; (JP); ISHII, Hideaki, -chome, Ageo-shi, Saitama 3620046; (JP)
(74) Representative: Grünecker, Kinkeldey, Stockmair & Schwanhäusser Anwaltssozietät
(86) International application number: PCT/JP2005/015881
(87) International publication number: WO 2006/025437

(56) References cited:
- JP-A- 6 270 839
- JP-A- 2000 185 667
- JP-U- 6 078 161

## Description

### TECHNICAL FIELD

The present invention relates to a reinforcing structure for a framework of a vehicular chassis, and more particularly, to a framework reinforcing member adapted for use in reinforcing side rails of a vehicular chassis,

### BACKGROUND ART

A ladder-type chassis framework used for a small-sized truck or the like is constructed by arranging two separate side rails, respectively, formed of a metallic or alloy member having a U-shaped cross section so that openings of both side rails face one another with a spacing therebetween and then, by rigidly connecting the two side rails to one another with cross members. With the reinforcing of the above-described side rails, Japanese Patent Application Laid-Open Publication No. 10-147255 discloses a technique for the reinforcing side rails of a main framework in which a steel member having a U-shaped cross section is inserted from an opening of the side rail to be engaged with one another and welded thereto for reinforcement.

More specifically, the reinforcing member having a smaller size than that of the side rail and a U-shaped cross section is inserted into a concave portion of the side rail in a manner such that respective openings of the member and the side rail are met with each other to form a closed square cross section (an angled pipe shape) of both members. Subsequently, wall plate portions of the side rail and the reinforcing member that are abut to each other and are fixed to each other by welding.
Document JP-A- 6 270 839 discloses a framework reinforcing member according to the preamble of claim 1.

### DISCLOSURE OF THE INVENTION

### PROBLEMS TO BE SOLVED BY THE INVENTION

However, in the aforementioned conventional reinforcing structure, if a force is applied to the side rail in the transverse direction of the vehicle, a shearing force is exerted in a direction for shearing the welded portion between the wall plate portions of the side rail and the reinforcing member. Namely, since the welded wall plate portions of the side rail and the reinforcing member are disposed to substantially horizontally extend, if the force is exerted on the wall plate portion of the side rail in the transverse direction of the vehicle, a force is exerted in a direction urging the wall plate portion to be shifted from each other, that is, in a direction for shearing the welded portion. As a result, the welding may be stripped off, so that there is a need to enhance the weakened fixing force between the side rail and the reinforcing member.

The present invention has an object thereof to provide a framework reinforcing member that is capable of implementing a more robust fixing structure for a chassis framework.

### MEANS FOR SOLVING THE PROBLEMS

The above object is achieved by the special features of claim 1.
According to an aspect of the present invention, there is provided a framework reinforcing member for a chassis framework including two side rails having a U-shaped cross section with an opening at one side thereof, respectively, and arranged such that the openings of the two side rails face each other, wherein the framework reinforcing member is formed to have an essentially U-shaped cross section opening at one side thereof and sized to be insertable in an inside of the side rail, the framework reinforcing member being provided with a fixing plate portion formed in at least a part of an opening portion thereof in such a manner that a plate surface of the fixing plate portion substantially vertically extends, the fixing plate portion being inserted from the opening of the side rail in the inside thereof to be securely fixed to a wall plate portion of the side rail, which is formed to have a plate surface extending substantially vertically within the side rail. More specifically, the framework reinforcing member may be formed to have a cross-section in a shape of either substantially C-letter or an angled pipe at a portion formed as the fixing plate portion.

In the aforementioned aspect of the invention, the fixing plate portion of the framework reinforcing member may be fixedly secured to the wall plate portion of the side rail by using a plurality of fixing elements such as screws and a combination of threaded bolts and nuts which are disposed in a predetermined pitch in forward and backward directions of a vehicle. The pitch of the fixing elements may be an unequal pitch. Particularly, the pitch of the fixing elements may become gradually shorter (so as for the interval to be shortened) in the backward direction of the vehicle.

### EFFECT OF THE INVENTION

In the framework reinforcing member according to the present invention, the wall plate portion and the fixing plate portion that are disposed to substantially vertically extend within the side rail and the framework reinforcing member are fixedly secured to each other. Unlike the aforementioned conventional technique where the wall plate portions that are disposed to substantially horizontally extend are fixed to each other by welding, even if a force is exerted in a transverse direction of the vehicle on the side rail, a shearing force is not exerted in a direction in which separation of the side rail and the reinforcing member which are fixedly secured might occur. Accordingly, a fixing force can be more strengthened.

In addition, if the fixing plate portion is fixed by using threaded bolts and nuts as the fixing elements, an assembling process can be more easily performed.
In addition, if the pitch of the fixing elements in the forward and backward direction of the vehicle is an unequal pitch, and particularly, if the pitch becomes gradually shorter in the backward direction of the vehicle, a portion where the pitch is long functions as a crushable zone for being relatively easily crushed to absorb impact. A portion where the pitch is short functions as a safety zone for being relatively difficult to crush. Accordingly, it is possible to provide a vehicle framework with effective impact resistance.

### BRIEF DESCRIPTION OF THE DRAWINGS

Fig. 1 is a perspective view of a framework reinforcing member according to the present invention fixed to a side rail of a chassis framework;
Fig. 2 is an enlarged perspective view of the side rail as seen from an opposite side of FIG. 1;
Fig. 3 is a perspective view of the framework reinforcing member according to the present invention; and
Fig. 4 is a cross sectional view of the framework reinforcing member according to the present invention fixed to the side rail of the chassis framework.

### EXPLANATION OF REFERENCE SYMBOLS

10 side rail (chassis framework)
11 substantially vertical wall plate portion
12 substantially horizontal wall plate portion
20 framework reinforcing member
21 substantially vertical wall plate portion
22 substantially horizontal wall plate portion
23 fixing plate portion
24 fixing element (threaded bolt and nut)
25 bolt hole

### BEST MODE FOR CARRYING OUT THE INVENTION

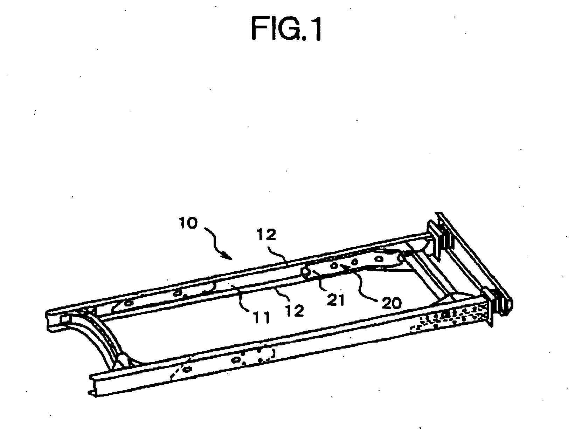

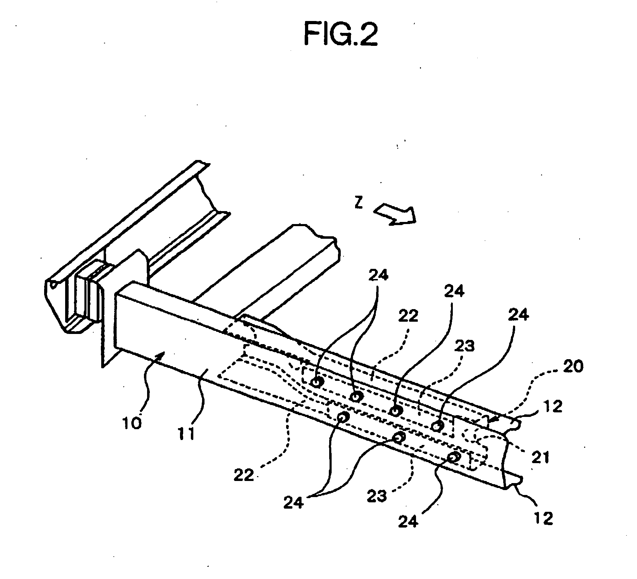

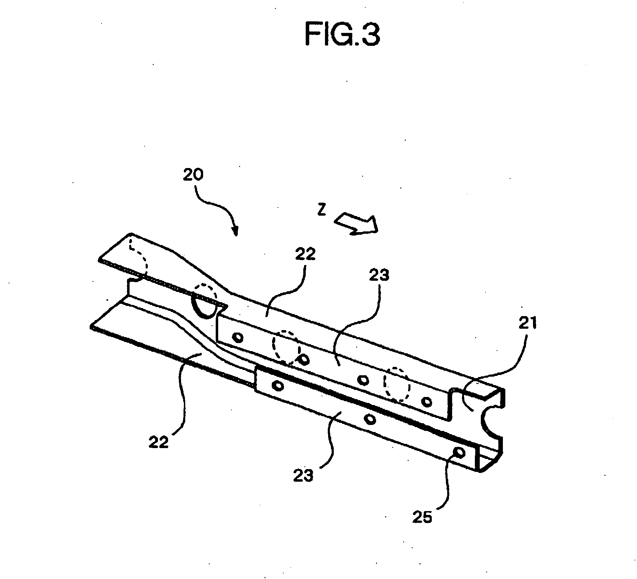

Fig. 1 shows an embodiment of framework reinforcing members 20 which are partially provided to an inner portion of a side rail 10 having a U-shaped cross section constituting a ladder-type chassis framework. In Fig. 1, a right side is in a front direction of a vehicle, and a left side is in a rear direction thereof. In Figs. 2 and 3, which are views as seen from an opposite side of Fig. 1, a left side is in the front direction of the vehicle, and a right side is in the rear side thereof.
In the chassis framework according to the embodiment, openings of the two side rails 10 are disposed to face each other, and the two side rails are connected with cross members. Each of the side rails 10 is a steel member having a U-shaped cross section which includes a wall plate portion 11 of which plate surface is disposed to substantially vertically extend and wall plate portions 12 of which plate surface is disposed to substantially horizontally extend from an upper or lower end of the wall plate portion 11 toward a central portion of the vehicle. In this case, a front bumper member of the vehicle is attached to the front ends of the side rails 10.

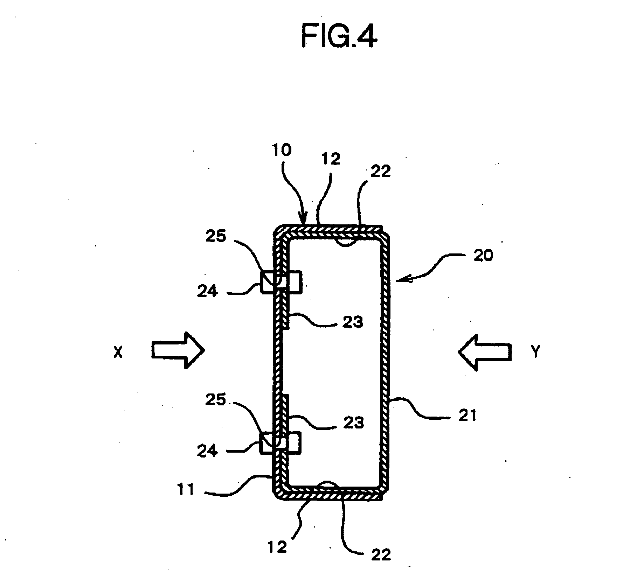

The framework reinforcing members 20 have a function of reinforcing the front end portions of the side rails 10. In a cab over truck, the framework reinforcing members 20 are provided to a lower portion of a cab in the chassis framework. According to the embodiment, as shown in Figs. 2 and 3 which are views as seen from the opposite side of Fig. 1 and Fig. 4 which is a cross sectional view, each of the framework reinforcing members 20 has a U-shaped cross section and includes a wall plate portion 21 of which plate surface is disposed to substantially vertically extend and wall plate portions 22 of which plate surface is disposed to substantiate horizontally extend from an upper or lower end of the wall plate portion 21 toward an external portion of the vehicle. In addition, a size of the framework reinforcing member 20, that is, a space between the two wall plate portions 22 and 22, is defined so as to be inserted into an inner portion of the side rail 10. In addition, fixing plate portions 23 of which plate surface is disposed to substantially vertically extend are provided to openings, that is, ends of the wall plate portions 22. Therefore, according to the embodiment, a cross section of each of the portion of the framework reinforcing member 20 where the fixing plate portions 23 are disposed is in an angled C shape.

The fixing plate portions 23 may be disposed along the entire regions of the openings in the longitudinal direction thereof (the forward and backward directions of vehicle). According to the embodiment, since the front portion of the framework reinforcing member 20 is designed to have a cross section which is differently shaped according to a framework structure, the fixing plate portions 23 may be disposed at the partial regions, that is, the rear regions of the openings instead of the entire regions thereof. In addition, the cross section of the portion of the framework reinforcing member 20 where the fixing plate portions 23 are disposed is not limited to the aforementioned angled C-letter shape, but it may be an angled pipe shape formed by attaching the distal ends of the fixing plate portions 23. However, the framework reinforcing member 20 having the C-letter shape cross section can be more easily processed in terms of workability.

The fixing plate portions 23 which are inserted into the inner portion of the side rail 10 are fixed by contacting the fixing plate portions 23 on the wall plate portion 11, inserting threaded bolts 24 into bolt holes 25, and engaging the bolts and nuts 24 tightly, wherein the threaded bolts and nuts 24 are fixing elements according to the embodiment. If the nuts among the bolts 24 and the nuts 24 are fixed on a rear surface of the fixing plate portions 23 in advance by welding or the like for an assembling process, workability can be improved.
As shown in the cross sectional view of Fig. 4, the fixing plate portions 23 are fixed on the wall plate portion 11 of the side rail 10. Therefore, although a force is exerted in the transverse direction of the vehicle, that is, the directions indicated by arrows X and Y, the force is not exerted as a shearing force in a direction of cutting the fixing structure with the bolts 24 and the nuts 24. On the contrary, in the aforementioned conventional structure, the horizontal wall plate portions (wall plate portions 12 and 22 shown in Fig. 4) of the side rail and the framework reinforcing member are fixed to each other by welding. Therefore, if the force is exerted in the transverse direction of the vehicle indicated by arrows X and Y, the force is exerted in the direction that the wall plate portions may be shifted from each other, i.e., in the direction of shearing the fixing structure, so that a fixing force for the fixing structure can be weakened. Accordingly, when the framework reinforcing member 20 according to the embodiment is used instead of the conventional structure, it is possible to implement a fixing structure with an improved strength.

In the embodiment, a pitch (that is, an arranging interval) of the threaded bolts and nuts 24 in the forward and backward directions of the vehicle is an equal pitch. Alternatively, the pitch may be defined to become shorter and shorter in the backward direction of the vehicle (indicated by arrow Z), so that it is possible to implement a fixing structure with more bolts and nuts 24. In such a case of an unequal pitch, a portion where the pitch is long can be more easily crushed than a portion where the pitch is short. Therefore, the portion where the pitch is long functions as a crushable zone for absorbing impact, and the portion where the pitch is short functions as a safety zone for withstanding impact. As a result, the fixing structure with such an unequal pitch of bolts and nuts can be advantageously used in terms of safety.

In addition, according to the embodiment, the framework reinforcing member 20 can be produced in a post-assembly scheme for the threaded bolts and nuts 24. Accordingly, there is an advantage in that a process for inserting harness through an inner side of the side rail 10 can be easily performed.

## Claims

1. A chassis framework comprising a framework reinforcing member (20),
the chassis framework provided with two side rails (10) have a U-shaped cross section with an openings at one side thereof, respectively, and arranged such that the openings of the two side rails (10) face each other, wherein
the framework reinforcing member (20) is formed to have a U-shaped cross section opening at one side thereof and sized to be insertable in an inside of the side rail (10),
the framework reinforcing member (20) being provided with a fixing plate portion (23) formed in at least a part of an opening portion thereof in such a manner that a plate surface of the fixing plate portion (23) vertically extends,
the fixing plate portion (23) capable of being inserted from the opening of the side rail (10) in the inside thereof to be securely fixed to a wall plate portion (11) of the side rail (10), which is formed to have a plate surface extending vertically within the side rail (10),
**characterized in that**
the fixing plate portion (23) is fixed by using a plurality of fixing elements (24) which are disposed by a predetermined unequal pitch in forward and backward directions of a vehicle.

2. The chassis framework according to claim 1, wherein the pitch of the fixing elements (24) becomes gradually shorter in the backward direction of the vehicle.

3. The chassis framework according to claim 1, wherein the fixing elements (24) are threaded bolts and nuts.

4. The chassis framework according to claim 3, wherein the nuts are fixed on a rear surface of the fixing plate portion in advance.

## Patentansprüche

1. Chassisrahmenaufbau, aufweisend ein Rahmenaufbauverstärkungsteil (20), wobei der Chassisrahmenaufbau, versehen mit zwei Seitenschienen (10) versehen ist, die jeweils einen U- förmigen Querschnitt mit einer Öffnung an einer Seite derselben haben, und derart angeordnet sind, dass die Öffnungen der zwei Seitenschienen (10) einander zugewandt sind, wobei
das Rahmenaufbauverstärkungsteil (20) gebildet ist, um eine U- förmige Querschnittsöffnung an seiner einen Seite zu haben und bemessen ist, um in ein Inneres der Seitenschiene (10) einsetzbar zu sein,
das Rahmenaufbauverstärkungsteil (20) mit einem Befestigungsplattenabschnitt (23) versehen ist, gebildet in zumindest einem Teil eines Öffnungsabschnittes desselben derart, dass sich eine Plattenoberfläche des Befestigungsplattenabschnittes (23) vertikal erstreckt,
der Befestigungsplattenabschnitt (23) in der Lage ist, von der Öffnung der Seitenschiene (10) in deren Inneres eingesetzt zu werden, um sicher an einem Wandplattenabschnitt (11) der Seitenschiene (10) befestigt zu werden, die gebildet ist, um eine Plattenoberfläche zu haben, die sich vertikal innerhalb der Seitenschiene (10) erstreckt,
**dadurch gekennzeichnet, dass**
der Befestigungsplattenabschnitt (23) unter Verwendung einer Mehrzahl von Befestigungselementen (24) befestigt ist, die mit einer vorbestimmten ungleichen Teilung in der Vorwärts- und Rückwärts- Richtung eines Fahrzeuges angeordnet sind.

2. Chassisrahmenaufbau nach Anspruch 1, wobei die Teilung der Befestigungselemente (24) in der Richtung nach hinten des Fahrzeuges allmählich kürzer wird.

3. Chassisrahmenaufbau nach Anspruch 1, wobei die Befestigungselemente (24) verschraubte Schrauben und Muttern sind.

4. Chassisrahmenaufbau nach Anspruch 3, wobei die Muttern auf einer hinteren Oberfläche des Befestigungsplattenabschnittes im Voraus befestigt sind.

## Revendications

1. Cadre de châssis comprenant un élément de renforcement de cadre (20),
le cadre de châssis étant pourvu de deux rails latéraux (10) qui ont une section en forme de U avec une ouverture d'un côté de celle-ci, respectivement, et agencés de sorte que les ouvertures des deux rails latéraux (10) se font face, dans lequel
l'élément de renforcement de cadre (20) est formé de manière à avoir une section en forme de U s'ouvrant d'un côté de celle-ci et est dimensionné pour pouvoir être inséré à l'intérieur du rail latéral (10),
l'élément de renforcement de cadre (20) étant pourvu d'une partie formant plaque de fixation (23) formée au moins dans une partie d'une partie d'ouverture de celui-ci de manière à ce qu'une surface de plaque de la partie formant plaque de fixation (23) s'étende verticalement,
la partie formant plaque de fixation (23) pouvant être insérée à partir de l'ouverture du rail latéral (10) à l'intérieur de celui-ci pour être fixée fermement à une partie formant plaque de paroi (11) du rail latéral (10), qui est formée de manière à avoir une surface de plaque s'étendant verticalement dans le rail latéral (10),
**caractérisé en ce que**
la partie formant plaque de fixation (23) est fixée en utilisant une pluralité d'éléments de fixation (24) qui sont disposés avec un pas inégal prédéterminé dans les directions vers l'avant et vers l'arrière d'un véhicule.

2. Cadre de châssis selon la revendication 1, dans lequel le pas des éléments de fixation (24) diminue graduellement dans la direction vers l'arrière du véhicule.

3. Cadre de châssis selon la revendication 1, dans lequel les éléments de fixation (24) sont des boulons ou des écrous filetés.

4. Cadre de châssis selon la revendication 3, dans lequel les écrous sont fixés sur une surface arrière de la partie formant plaque de fixation à l'avance.
